**Europäisches Patentamt**

**European Patent Office**

**Office européen des brevets**

(19)

(11) Veröffentlichungsnummer: **0 229 387**
**B1**

(12)

# EUROPÄISCHE PATENTSCHRIFT

(45) Veröffentlichungstag der Patentschrift:
06.09.89

(51) Int. Cl.⁴: **C 02 F 3/20, F 16 L 41/08**

(21) Anmeldenummer: **86118006.5**

(22) Anmeldetag: **23.12.86**

(54) Vorrichtung zum Belüften von Wasser.

(30) Priorität: **07.01.86 DE 3600234**

(43) Veröffentlichungstag der Anmeldung:
**22.07.87 Patentblatt 87/30**

(45) Bekanntmachung des Hinweises auf die Patenterteilung:
**06.09.89 Patentblatt 89/36**

(84) Benannte Vertragsstaaten:
**AT BE CH DE ES FR GB GR IT LI LU NL SE**

(56) Entgegenhaltungen:
**DE-A- 2 358 325**
**DE-A- 3 316 140**
**DE-C- 3 313 320**
**FR-A- 2 554 538**
**US-A- 3 953 555**
**US-A- 4 232 421**

(73) Patentinhaber: **Jäger, Arnold, Gehrbergsweg 6A,**
**D-3167 Burgdorf - Ramlingen (DE)**

(72) Erfinder: **Jäger, Sebastian, Gehrbergsweg 6,**
**D-3167 Burgdorf (DE)**

(74) Vertreter: **Depmeyer, Lothar, Auf der Höchte 30,**
**D-3008 Garbsen 1 (DE)**

ACTORUM AG

## Beschreibung

Die Erfindung betrifft eine Vorrichtung zum Belüften von Wasser, insb. bei der Wasseraufbereitung oder bei Abwässern, mit tellerartigen Belüftern, die im wesentlichen aus einer starren Halterung und einer darauf angeordneten, zum Austritt der Luft geschlitzten Gummiplatte bestehen, wobei die Halterung über einen zur Luftzufuhr dienenden Stutzen mit einem zur Verteilung der Luft dienenden Rohr verbunden ist, an dem mehrere, über die Rohrlänge verteilt angeordnete Belüfter angeschlossen sind.

Bei diesen Vorrichtungen sind mehrere Belüfter über die Länge des Verteilerrohres verteilt angeordnet. Dabei ist es wichtig, dass bei der Installation oder bei Reparaturen eine schnelle, luftdichte Montage der Belüfter vollzogen werden kann. Dies wurde bei bekannten Vorrichtungen nicht erreicht, weil hier die Befestigung der Belüfter an den Verteilerrohren mittels Schellen erfolgt.

Weiterhin ist es bekannt (DE-A-3 316 140), die tellerartigen Belüfter mit einem Ansetzstutzen zu versehen, der einen Gewindeanschluss aufweist, mit dem ein Gaszuführungsschlauch angeschlossen wird. Abgesehen davon, dass für einen solchen Anschluss der Gaszuführungsschlauch mit einer Schraubarmatur versehen werden muss, enthält dieser bekannte Vorschlag keine Hinweise auf eine insb. kippsichere Halterung der Belüfter an einem zur Verteilung der Luft dienenden Rohr.

Ferner sind Rohrverbindungen bekannt (DE-A-2 358 325), bei denen ein rohrförmiges Ende eines Abweigrohres oder dgl. in eine Bohrung der Wandung einer Rohrstrecke hineinragt und mit dieser über ein Verbindungsstück befestigt ist. Diese Befestigung wird mittels einer Gummimanschette verwirklicht. Diese Veröffentlichung betrifft somit weder eine Vorrichtung zum Belüften von Wasser noch eine kippsichere Befestigung eines Elementes auf einem Gasverteilungsrohr.

Der Erfindung liegt die Aufgabe zugrunde, bei Vorrichtungen zum Belüften von Wasser der eingangs erwähnten Art eine schnell installierbare, stabile, kippsichere Befestigung der tellerartigen Belüftungselemente auf einem Gasverteilungsrohr zu bewirken.

Diese Aufgabe wird erfindungsgemäss durch die im Kennzeichen des 1. Patentanspruches angeführten Merkmale gelöst. Weitere, zweckmässige Ausgestaltungen der Erfindung sind in den Unteransprüchen aufgezeigt.

Eine solche Befestigung der Belüftungselemente ist schnell zu vollziehen, da sie eine Steckverbindung ist. Die einstückig ausgeführte Buchse sichert infolge ihrer Elastizität und der in sie beim Einstecken eingeleiteten Spannung eine ausreichend sichere Abdichtung der Luftzufuhr unter die mit den Austrittsöffnungen ausgestatteten geschlitzten Gummiplatte, aus der somit die Luft in Form kleiner Bläschen ausströmt. Die Befestigung ist nicht nur stabil und kippsicher, vielmehr widersteht die Befestigung auch den bei Belüftern der eingangs erwähnten Art auftretenden Erschütterungen und Schwingungen.

Ein Ausführungsbeispiel der Erfindung ist in der Zeichnung dargestellt. Es zeigen:

Fig. 1 zeigt einen senkrechten Schnitt durch eine Vorrichtung zum Belüften von Abwässern oder anderen Wasserarten, die aufbereitet werden sollen, und zwar im Bereich einer Verbindung zwischen einem Verteilerrohr für die Luft einerseits und einem tellerartigen Belüfter andererseits und

Fig. 2 einen Gummiformkörper für die Verbindung gemäss Fig. 1 in der Ansicht.

Das im Querschnitt grosse Verteilerrohr 1 z.B. aus Kunststoff hat eine grössere Anzahl von Durchbrechungen in Form von oben liegenden Löchern 2, die kreisrund gestaltet sind. Jedem Loch 2 ist dabei ein tellerartiger Belüfter zugeordnet in der Weise, dass viele Belüfter über die Länge des Verteilerrohres 1 verteilt angeordnet sind. Diese Belüfter bestehen im wesentlichen aus einer starren, flachen Halterung 3 für eine kreisrunde Platte 4 aus Weichgummi und einem unten an der Halterung 3 fest angebrachten Stutzen 5, dessen Durchgang 6 durch die Halterung 3 führt, um so vorgespannte Luft vom Verteilerrohr 1 aus unter die Platte 4 gelangen zu lassen. Da die Platte 4 mit einer Vielzahl kleiner, nicht dargestellter Schlitze versehen ist, kann die Luft über diese Schlitze in feinen Perlen in das Wasser entweichen. Die Schlitze öffnen sich dabei unter dem Luftdruck elastisch und schliessen sich, wenn der Luftdruck ein gewisses Mass unterschreitet. Erwähnt sei noch, dass der Rand 7 der Platte 4 oben auf den Rand 8 der Halterung 3 aufgeklebt oder in anderer Weise festhaftend angeordnet ist, um ein seitliches Abströmen der Druckluft auszuschliessen.

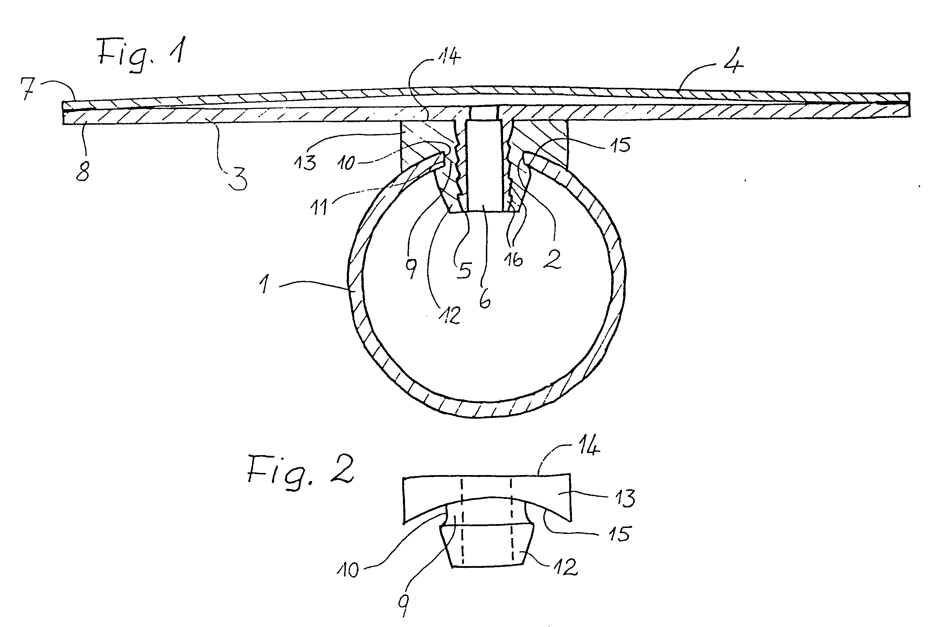

Wichtig ist die Verbindung zwischen dem Verteilerrohr 1 und dem Belüfter bzw. der Halterung 3. Sie wird unter Mitwirkung des Gummiformkörpers gemäss Fig. 2 hergestellt.

Der Stutzen 5 durchsetzt die Wandung des Verteilerrohres 1, reicht also in das Innere dieses Rohres. Umgeben ist der Stutzen 5 von einem buchsenartigen Abschnitt 9 des Gummiformkörpers, in dessen Umfangsnut 10 der Rand 11 des Verteilerrohres 1 hineinragt. Die Wandstärke des Abschnittes 9 nimmt zum freien Ende des Stutzens 5 ab, um so einen sich konisch verjüngenden Endabschnitt des Abschnittes 9 zu schaffen. Dieser Endabschnitt ist mit 12 bezeichnet. Zur Halterung 3 hin geht der Gummiformkörper in eine Verbreiterung 13 über, die oben eine waagerechte Fläche 14 für die Halterung 3 bildet und unten mit einer ausgerundeten Fläche 15 — dem Radius des Mantels des Verteilerrohres 1 angepasst — auf dem Verteilerrohr 1 satt aufliegt.

Wichtig ist ferner, dass der Gummi zwischen dem Rand 11 und dem Stutzen 5 auf Druck vorgespannt ist, damit eine gute Abdichtung entsteht und die vorgespannte Luft daran gehindert ist, über die Stutzenverbindung in das Wasser zu gelangen.

Durch diese Anordnung wird sichergestellt, dass zudem der Belüfter fest, jedoch elastisch nachgiebig auf dem Verteilerrohr gelagert ist. Der Belüfter steht nämlich nur über den Gummi oder dgl. des Formkörpers gemäss Fig. 2 mit dem Verteilerrohr 1 in Verbindung.

Zu erwähnen ist noch, dass die Aussenfläche des Stutzens 5 nicht glatt zylindrisch, sondern mit umlaufenden Ringen 16 bzw. Ringwülsten versehen ist, die vorzugsweise noch einen etwa sägezahnförmigen Querschnitt erhalten in der Weise, dass die flacher ansteigenden Seitenflächen der Ringwülste dem freien Ende des Stutzens 5 zugekehrt sind. Dadurch wird ein Hineintreiben des Stutzens 5 in den schon auf dem Verteilerrohr 1 befindlichen Gummiformkörper erleichtert, jedoch ein Lösen des Stutzens 5 vom Verteilerrohr 1 erschwert.

Zur Montage des Belüfters wird zunächst der Gummiformkörper in das Loch 2 eingesetzt. Alsdann wird der Stutzen 5 in die zentrale Bohrung des Gummiformkörpers eingedrückt. Damit ist der Belüfter ausreichend sicher und zudem noch elastisch gelagert. Es ist aber auch möglich, zunächst den Gummiformkörper mit dem Stutzen 5 zu verbinden und dann diese Teile gemeinsam in das Loch einzudrücken. Im allgemeinen ist allerdings die zuerst geschilderte Montageart vorzuziehen. Eine Demontage ist durch Herausziehen des Stutzens 5 aus der Mittenbohrung des Gummiformkörpers möglich.

**Patentansprüche**

1. Vorrichtung zum Belüften von Wasser, insb. bei der Wasseraufbereitung oder bei Abwässern, mit tellerartigen Belüftern, die im wesentlichen aus einer starren Halterung (3) und einer darauf angeordneten, zum Austritt der Luft geschlitzten Gummiplatte (4) bestehen, wobei die Halterung (3) über einen zur Luftzufuhr dienenden Stutzen (5) mit einem zur Verteilung der Luft dienenden Rohr (1) verbunden ist, an dem mehrere, über die Rohrlänge verteilt angeordnete Belüfter angeschlossen sind, dadurch gekennzeichnet, dass der Stutzen (5) in das Rohr (1) hineinragt und zwischen dem Stutzen (5) und dem Rand (11) des zur Aufnahme des Stutzens (5) dienenden Loches (2) in dem Rohr (1) eine vorgespannte, aus Gummi oder gummiähnlichen Kunststoffen bestehende, den Stutzen (5) umschliessende Buchse (9) angeordnet ist, die eine Ringnut (10) zur Aufnahme des Randes (11) hat, sich im Aussendurchmesser zum freien Ende des Stutzens (5) hin konisch verjüngt, ausserhalb des Rohres (1) verbreitert ist, mit ihrer Verbreiterung (13) unten am Rohr (1) anliegt und oben eine Anlage für die Halterung (3) bildet, wobei die oben liegende Fläche (14) der Verbreiterung (13) eine zur kippsicheren Lagerung der Halterung (3) ausreichende Grösse aufweist und die Buchse (9) unten eine der Rohrkontur entsprechende Gestalt hat (Fläche 15) und mit ihrer oben befindlichen Verbreiterung (13) und einem sich innerhalb des Rohres (1) befindlichen Abschnitt einen einheitlichen, für sich hergestellten Gummiformkörper bildet.

2. Vorrichtung nach Anspruch 1, dadurch gekennzeichnet, dass der Stutzen (5) aussen mit mehreren Ringwülsten (16) versehen ist.

3. Vorrichtung nach Anspruch 2, dadurch gekennzeichnet, dass die Ringwülste (16) einen im wesentlichen sägezahnartigen Querschnitt haben, wobei die Seitenflächen der Ringwülste (16) mit dem geringeren Anstieg dem freien Ende des Stutzens (5) zugekehrt sind.

4. Vorrichtung nach Anspruch 1, dadurch gekennzeichnet, dass die zur Aufnahme des Stutzens (5) dienende Längsbohrung der Buchse (9) so bemessen ist, dass die Vorspannung der Buchse (9) durch Eintreiben des Stutzens (5) in die Längsbohrung erreichbar ist.

**Claims**

1. Apparatus for water aeration, esp. for water treatment or for sewage, having plate-like aerators which substantially comprise a rigid holder (3) and a rubber plate (4), which is disposed on said holder and is provided with slots for the exit of the air, wherein the holder (3) is connected to a pipe (1) by means of a connecting piece (5), which serves to supply air, said pipe serving to distribute the air and being in communication with a plurality of aerators which are distributed over the length of the pipe, characterised in that the connecting piece (5) protrudes into the pipe (1), and an initially tensioned bush (9) is disposed between the connecting piece (5) and the edge (11) of the hole (2) in the pipe (1), which hole serves to receive the connecting piece (5), said bush being formed from rubber or rubber-like plastics materials and surrounding the connecting piece (5), which bush is provided with an annular groove (10) for receiving the edge (11), tapers conically towards the free end of the connecting piece (5) in respect of its external diameter, widens externally of the pipe (1), abuts against the pipe (1) with the lower end of its widened portion (13) and forms an abutment for the holder (3) at its upper end, the upper surface (14) of the widened portion (13) being adequately dimensioned for the stable mounting of the holder (3), and the lower end of the bush (9) having a configuration, which corresponds to the configuration of the pipe (surface 15), and forming a uniform moulded rubber body, which is produced per se, with its upper widened portion (13) and a portion situated inside the pipe (1).

2. Apparatus according to claim 1, characterised in that the outer surface of the connecting piece (5) is provided with a plurality of annular beads (16).

3. Apparatus according to claim 2, characterised in that the annular beads (16) have a substantially saw-toothed cross-section, wherein the lateral faces of the annular beads (16) having the lesser slope face the free end of the connecting piece (5).

4. Apparatus according to claim 1, characterised in that the longitudinal bore in the bush (9), serving to receive the connecting piece (5), is so dimensioned that the initial tension of the bush (9) can be achieved by inserting the connecting piece (5) into the longitudinal bore.

**Revendications**

1. Dispositif d'aération de l'eau, notamment pour le traitement de l'eau ou pour des eaux résiduaires, comprenant des aérateurs de type à plateau, qui sont constitués essentiellement d'une pièce de fixation (3) rigide sur laquelle est montée une plaque en caoutchouc (4) fendue pour la sortie de l'air, la pièce de fixation (3) communiquant, par un ajutage (5) servant à l'amenée de l'air, avec un tuyau (1) servant à la répartition de l'air et auquel sont raccordés plusieurs aérateurs disposés de manière répartie sur la longueur du tuyau, caractérisé en ce que l'ajutage (5) pénètre dans le tuyau (1) et entre l'ajutage (5) et le bord (11) du trou (2) ménagé dans le tuyau (1) et servant à recevoir l'ajutage (5) est montée une douille (9) précontrainte, en caoutchouc ou en une matière plastique analogue au caoutchouc, entourant l'ajutage (5), ayant une gorge annulaire (10) de réception du bord (11), dont le diamètre extérieur se rétrécit coniquement vers l'extrémité libre de l'ajutage (5) qui s'élargit à l'extérieur du tuyau (1) et qui s'applique, par sa partie élargie (13), par en-dessous au tuyau (1) et forme, au-dessus, un support pour la pièce de fixation (3), la surface (14), tournée vers le haut, de la partie élargie (13) ayant une dimension suffisante pour supporter la pièce de fixation (3) sans possibilité de basculement, et la douille (9) ayant vers le bas une conformation (surface 15) correspondant à l'un des contours du tuyau et formant, par sa partie élargie (13) se trouvant vers le haut et par une section se trouvant à l'intérieur du tuyau (1), une pièce moulée en caoutchouc unitaire et fabriquée pour elle-même.

2. Dispositif suivant la revendication 1, caractérisé en ce que l'ajutage (5) est muni extérieurement de plusieurs bourrelets annulaires (16).

3. Dispositif suivant la revendication 2, caractérisé en ce que les bourrelets annulaires (16) ont une section transversale sensiblement de type en dents de scie, les surfaces latérales des bourrelets annulaires (16), qui sont le moins abruptes, étant tournées vers l'extrémité libre de l'ajutage (5).

4. Dispositif suivant la revendication 1, caractérisé en ce que le perçage longitudinal de la douille (9), qui sert à recevoir l'ajutage (5), a des dimensions telles que l'on peut obtenir la précontrainte de la douille (9) en introduisant l'ajutage (5) dans l'alésage longitudinal.

Fig. 1

Fig. 2

EP 0 229 387 B1